# EUROPÄISCHE PATENTSCHRIFT

(11) **EP 3 728 892 B1**
(45) Veröffentlichungstag und Bekanntmachung des Hinweises auf die Patenterteilung: **18.08.2021**
(21) Anmeldenummer: 18792876.7
(22) Anmeldetag: 16.10.2018
(51) Int. Cl.: F16F 13/10, F16F 13/18, F16F 13/26, B60K 5/12

(54) **HYDROLAGER**
HYDRAULIC BEARING
PALIER HYDRAULIQUE

(30) Priorität: 20.12.2017 DE 102017223382
(43) Veröffentlichungstag der Anmeldung: 28.10.2020
(73) Patentinhaber: ContiTech Vibration Control GmbH, 30165 Hannover (DE)
(72) Erfinder: WERHAHN, Max, 30419 Hannover (DE); GENDERJAHN, Robert, 30419 Hannover (DE); PEHLEMANN, Uwe, 30419 Hannover (DE)
(74) Vertreter: Continental Corporation
(86) Internationale Anmeldenummer: PCT/EP2018/078133
(87) Internationale Veröffentlichungsnummer: WO 2019/120680

(56) Entgegenhaltungen:
- WO-A1-2004/067994
- DE-A1- 10 019 872
- DE-A1-102015 224 937

## Beschreibung

Die vorliegende Erfindung betrifft ein Hydrolager, einen Motor mit einem Hydrolager sowie ein Kraftfahrzeug mit einem derartigen Motor.

Zur Isolation von Schwingungen sind verschiedene Arten und Ausführungen von Lagern bekannt. Zu diesen gehören die sogenannten Hydrolager, die auch als Hydrauliklager bezeichnet werden. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst wirkungsvoll zu isolieren.

Bei einem Hydrolager kann eine Flüssigkeit, wie z.B. eine Hydraulikflüssigkeit, zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder, wie üblicherweise ein Elastomerelement, auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden oft durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran über eine Koppelstange und einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Die Steuermembran ist eine elastisch verformbare, plattenförmige Membran. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden. Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt das Fluid von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches vollkommen von der Umgebung abgetrennt ist. Dabei kann dieser Raum, z.B. durch ein zentrales Loch in der Koppelstange, entlüftet sein, um beispielsweise Temperaturabhängigkeiten u.ä. zu vermeiden. Alle zuvor beschriebenen Arten von Hydrolagern können als Motorlager eingesetzt werden.

DE 100 19 872 A1, DE 10 2015 224937 A1 und WO 2004/067994 A1 offenbaren gattungsgemäße Hydrolager.

Bekannte Hydrolager weisen den Nachteil auf, dass zusätzlicher vertikaler Bauraum für die Anordnung des Aktors und dessen Anbindung benötigt wird. Dieser benötigte vertikale Bauraum ist gerade bei einem invertierten aktiven Hydrolager prinzipbedingt besonders groß, da Bauraum für eine Umströmgeometrie, für die Luftkammer und für eine Dichtung notwendig ist.

Nachteilig ist weiterhin, dass es bei unzureichender Dimensionierung oder Alterung bzw. Ermüdung der Dichtstelle zwischen Aktor und Steuermembran zu Undichtigkeiten und damit zur Verschlechterung der Lagereigenschaften kommen kann.

Nachteilig ist des Weiteren die hohe zusätzliche Masse des separaten Aktorstößels und des Kolbens. Neben den höheren Kosten und der aufwendigeren Montage führt das höhere Gewicht auch zu einer starken Beeinflussung der Resonanzfrequenz des an das Lager angekoppelten Aktors. Eine entsprechend niedrige Eigenfrequenz führt in diesem Fall unmittelbar zu einem verschlechterten hochfrequenten Lagerverhalten.

Eine Aufgabe der vorliegenden Erfindung ist es, ein aktives Hydrolager mit einem möglichst kompakten Bauraum bereitzustellen. Außerdem wäre es von Vorteil, das Gewicht, insbesondere das Gewicht der beweglichen Bauelemente, bei einem Hydrolager zu reduzieren bzw. möglichst gering zu halten.

Gemäß einem ersten Aspekt der Erfindung wird die Aufgabe gelöst durch ein Hydrolager mit den Merkmalen des Anspruchs 1.

Vorgesehen ist also ein Hydrolager, aufweisend: eine verformbare Tragfeder, eine von der Tragfeder teilweise umschlossene Arbeitskammer, die mit einer Flüssigkeit gefüllt ist, eine Ausgleichskammer, einen Drosselkanal, der sich von der Arbeitskammer zu der Ausgleichskammer zum Austausch von Flüssigkeit erstreckt, und einen elektromagnetisch wirkenden Linearaktuator mit einem Stator und einem Anker. Der Anker erstreckt sich in einer Auslenkrichtung von einer ersten Ankerstirnseite zu einer gegenüberliegenden, zweiten Ankerstirnseite, wobei der Anker derart mittels einer Gleitlagerung am Stator gelagert ist, so dass der Anker in elektromagnetischer Wechselwirkung mit dem Stator in Auslenkrichtung auslenkbar ist. Zudem bildet eine erste Aktuatorseite, die zumindest die erste Ankerstirnseite umfasst, einen Teil einer Kammerwandung zur Begrenzung der Arbeitskammer, so dass die erste Ankerstirnseite in unmittelbarem Kontakt mit der Flüssigkeit aus der Arbeitskammer ist. Das Hydrolager weist einen Überstromkanal auf, der mit Flüssigkeit gefüllt ist. Ein Ende des Überstromkanals ist von einer zweiten Aktuatorseite, die gegenüberliegend zu der ersten Aktuatorseite angeordnet ist und zumindest die zweite Ankerstirnseite umfasst, begrenzt, so dass die zweite Ankerstirnseite in unmittelbarem Kontakt mit der Flüssigkeit des Überstromkanals ist. Der Überstromkanal erstreckt sich von dem zugehörigen Ende zu der Ausgleichskammer zum Fluidaustausch.

Somit betrifft die vorliegende Erfindung ein Hydrolager. Das Hydrolager weist die Arbeitskammer auf, die von der verformbaren Tragfeder teilweise umschlossen ist. Die Arbeitskammer ist mit einer Flüssigkeit gefüllt. Die Flüssigkeit kann vorzugsweise eine inkompressible Hydraulikflüssigkeit sein. Beispielsweise kann die Flüssigkeit Glykol oder eine andere Flüssigkeit sein. Das Hydrolager weist eine Ausgleichskammer auf. Die Ausgleichskammer kann eine Kammer mit einer Wandung sein, bei der wenigstens ein Abschnitt der Wandung elastisch verformbar ist. Dieser elastisch verformbare Abschnitt der Wandung kann beispielsweise eine Membran sein. Dies bietet den Vorteil, dass das Volumen der Ausgleichskammer änderbar, insbesondere vergrößerbar ist. Eine Vergrößerung des Volumens der Ausgleichskammer kann insbesondere aufgrund einer Zunahme des Innendrucks der Flüssigkeit in der Ausgleichskammer möglich sein. Die Ausgleichskammer kommuniziert mit der Arbeitskammer über einen Drosselkanal, der sich von der Arbeitskammer zu der Ausgleichskammer zum Austausch von Flüssigkeit erstreckt. Damit kann eine Fluidkommunikation gewährleistet werden.

Das Hydrolager weist einen elektromagnetisch wirkenden Linearaktuator mit einem Stator und einem Anker auf. Der elektromagnetisch wirkende Linearaktuator kann auch als elektrischer Linearaktuator bezeichnet sein. Der Anker erstreckt sich in einer Auslenkrichtung des Aktuators von einer ersten Ankerstirnseite zu einer gegenüberliegenden, zweiten Ankerstirnseite. Der Anker ist in Bezug auf den Stator mittels einer Gleitlagerung gelagert. Die Gleitlagerung kann zum Teil beispielsweise in einem Mantelbereich zwischen der ersten Ankerstirnseite und der zweiten Ankerstirnseite angeordnet sein. Die Gleitlagerung kann dabei als Linearlager ausgeführt sein. Die Gleitlagerung zwischen dem Anker und dem Stator ist vorzugsweise derart ausgestaltet, dass der Anker in Auslenkrichtung bzw. entgegen der Auslenkrichtung in elektromagnetischer Wechselwirkung mit dem Stator auslenkbar, insbesondere verschiebbar, ist. Mit anderen Worten kann der Anker entlang einer durch die Auslenkrichtung definierten Auslenkachse aufgrund elektromagnetischer Wechselwirkung mit dem Stator auslenkbar sein. Der Linearaktuator kann eingerichtet sein, eine Änderung des Drucks der Flüssigkeit in der Arbeitskammer durch eine Auslenkung des Ankers zu gewährleisten und/oder zu unterstützen.

Beispielsweise kann der Stator des Linearaktuators eine hohlzylindrische Form aufweisen. Der Anker kann eine zylindrische Form aufweisen. Unter "zylindrisch" ist nicht notwendigerweise eine kreiszylindrische Form zu verstehen, obwohl dies bevorzugt ist. Der Stator kann aber auch wenigstens zwei Elemente aufweisen, die in Bezug zur Auslenkachse des Ankers konkav geformt sein können. Der Stator kann koaxial um eine äußere Mantelfläche des Ankers angeordnet sein. Der Stator kann beispielsweise mindestens eine Spule aufweisen. Der Anker kann beispielsweise mindestens einen Magneten aufweisen. Grundsätzlich kann dieser Aufbau auch umgekehrt ausgestaltet sein. So kann der mindestens eine Magnet beispielsweise dem Stator zugeordnet sein. In einer zugehörigen, vorteilhaften Ausgestaltung kann der Anker weichmagnetisches Material aufweisen oder daraus bestehen. So kann beispielsweise mindestens im Bereich der Mantelfläche des Ankers aus dem weichmagnetisches Material bestehen oder dieses aufweisen. Der übrige, innere Teil des Ankers kann aus einen anderen Material bestehen bzw. dieses aufweisen.

Zur Auslenkung des Ankers kann ein Strom durch die mindestens eine Spule des Stators fließen. Der Stromfluss in der mindestens einen Spule erzeugt ein Magnetfeld im Bereich des Ankers, insbesondere in dem Bereich des mindestens einen Magneten des Ankers. Der mindestens eine Magnet des Ankers wechselwirkt mit dem Magnetfeld der mindestens einen Spule des Stators und/oder lenkt das Magnetfeld der mindestens einen Spule des Stators. Dadurch wirkt eine Kraft auf den mindestens einen Magneten des Ankers und somit auch auf den gesamten Anker. Die Folge ist eine Auslenkung des Ankers entlang der Auslenkachse.

Die Spule des Stators kann flüssigkeitsdicht ausgestaltet sein. Die Spule des Stators kann beispielsweise flüssigkeitsdicht umschlossen sein. Die Spule des Stators kann beispielsweise mit einer flüssigkeitsdichten Ummantelung vollständig umschlossen sein. Der mindestens eine Magnet des Ankers kann flüssigkeitsdicht ausgestaltet sein. Der mindestens eine Magnet des Ankers kann beispielsweise flüssigkeitsdicht umschlossen sein. Der mindestens eine Magnet des Ankers kann beispielsweise mit einer flüssigkeitsdichten Ummantelung vollständig umschlossen sein. Es ist auch denkbar, dass der gesamte Stator flüssigkeitsdicht ausgestaltet sein kann. Es ist auch denkbar, dass der gesamte Anker flüssigkeitsdicht ausgestaltet sein kann. Dadurch kann es möglich sein, dass Teile des Linearaktuators, insbesondere Teile des Stators und/oder Teile des Ankers, von der Flüssigkeit in dem Hydrolager umgeben sind. Beispielsweise kann der Anker vollständig an seiner ersten und/oder zweiten Ankerstirnseite von der Flüssigkeit des Hydrolagers umgeben sein. Dadurch kann der Anker direkt in der Flüssigkeit des Hydrolagers angeordnet sein. Der Anker kann bei seiner Auslenkung in oder entgegen der Auslenkrichtung die ihn umgebende Flüssigkeit mit einer oder beiden Ankerstirnseiten direkt mit einem Druck beaufschlagen. Dabei kann wenigstens eine der beiden Ankerstirnseite als Kolbenfläche wirken und/oder entsprechend ausgebildet sein. Die Beaufschlagung der Flüssigkeit mit Druck kann somit mit Hilfe der Stirnseiten des auslenkbaren Ankers, die mit der Flüssigkeit im direkten Kontakt stehen, erfolgen. Ein aufwendiger Aufbau, bei dem beispielsweise ein externer und gekapselter Aktor einen Aktorstößel betätigt, an dessen freiem Ende eine Membran angeordnet ist, die die Flüssigkeit mit einem Druck beaufschlagt, kann somit vermieden werden. Durch die vorgenannten Eigenschaften kann der Linearaktuator, insbesondere der Anker des Linearaktuators, direkt in der Arbeitskammer des Hydrolagers platziert werden.

Die Ummantelung der Spule des Stators kann beispielsweise Kunststoff aufweisen und/oder davon gebildet sein. Die Ummantelung des Magneten kann beispielsweise Kunststoff aufweisen und/oder davon gebildet sein. Durch die Ummantelung kann die Flüssigkeit in dem Hydrolager z.B. aus der Arbeitskammer oder der Ausgleichskammer nicht in Kontakt mit dem Magneten oder der Spule kommen. Dadurch kann eine ungewünschte Kontaktierung von Anschlussleitungen der Spule verhindert werden. Es ist aber auch denkbar, dass durch die flüssigkeitsdichte Ummantelung Oxidationsprozesse oder andere ungewünschte Veränderungsprozesse des Magneten des Ankers oder der Spule des Stators verhindert werden.

Weiterhin können die Anschlussleitungen der Spule direkt durch z.B. ein Gehäuse oder die Ummantelung des Stators nach außen, z.B. außerhalb eines Gehäuses des Hydrolagers, z.B. zu einem Stecker geführt werden.

Der Stators mit der Spule kann Anschlussleitungen aufweisen, die mit einem Stecker verbunden sind. Die Spule, deren Anschlussleitungen und der Stecker können als Einheit ausgebildet sein. Die Einheit kann mit einem Kunststoff ummantelt sein. Eine Leitungsführung der Anschlussleitungen durch beispielsweise die Arbeitskammer oder die Ausgleichkammer kann so vermieden werden. Insbesondere kann eine Leitungsführung durch die Arbeitskammer oder die Ausgleichskammer zu einem externen Stecker so vermieden werden.

Weiterhin ist bevorzugt vorgesehen, dass der Linearaktuator des Hydrolagers eine erste und eine zweite Aktuatorseite aufweist. Die erste Aktuatorseite umfasst zumindest die erste Ankerstirnseite. Die erste Aktuatorseite bildet einen Teil einer Kammerwandung zur Begrenzung der mit der Flüssigkeit gefüllten Arbeitskammer. Die Begrenzung der Arbeitskammer ist derart ausgestaltet, dass die erste Ankerstirnseite in unmittelbarem Kontakt mit der Flüssigkeit aus der Arbeitskammer ist.

Die zweite Aktuatorseite ist gegenüberliegend zu der ersten Aktuatorseite angeordnet. Die zweite Aktuatorseite umfasst zumindest die zweite Ankerstirnseite. Die zweite Aktuatorseite begrenzt ein Ende eines Überstromkanals, der mit Flüssigkeit gefüllt ist. Die Begrenzung ist derart ausgestaltet, dass die zweite Ankerstirnseite in unmittelbaren Kontakt mit der Flüssigkeit des Überstromkanals ist.

Schließlich erstreckt sich der Überstromkanal zum Fluidaustausch von dem zugehörigen, einen Ende des Überstromkanals zu der Ausgleichskammer. Damit kann Flüssigkeit bei einer Auslenkung des Ankers in Richtung seiner zweiten Stirnseite durch den Überstromkanal in die Ausgleichskammer entweichen.

Durch das Hydrolager ist aufgrund des unmittelbaren Kontakts zwischen der Flüssigkeit in der Arbeitskammer und der ersten Ankerstirnseite vorteilhafterweise eine besonders gewichtssparende und kompakte Ausgestaltung des Linearaktuators möglich. Dies ergibt sich aus dem Umstand, dass der im Stand der Technik bei Hydrolagern verwendete Stößel sowie die damit gekoppelte Membran nicht mehr zur Funktion des Hydrolagers notwendig sind, da deren Funktionen durch den Anker des Linearaktuators übernommen wird, ohne jedoch den gleichen Bauraum, das gleiche Gewicht und/oder die gleiche Komplexität zu verursachen. Vielmehr kann dies verhindert werden.

Der unmittelbare Flüssigkeitskontakt zu beiden Ankerstirnseiten erlaubt das Auslenken des Ankers. Denn der Anker kann an einer Stirnseite Flüssigkeit bei einer Auslenkbewegung verdrängen, wobei Flüssigkeit an der anderen Stirnseite nachströmt, oder umgekehrt. Eine Auslenkung des Ankers ist dabei insbesondere in dem gewünschten Frequenzbereich möglich.

Zusammenfassend kann festgestellt werden, dass das Hydrolager die Nachteile im Stand der Technik beseitigt. Der Anker des Linearaktuators kann die Flüssigkeit in der Arbeitskammer durch den Fluidkontakt mit der ersten Ankerstirnfläche direkt und unmittelbar mit einem Druck beaufschlagen. Eine mechanische Übertragung einer Bewegung des Linearaktuators z.B. auf einen separaten Aktorstößel und eine Steuermembran ist daher nicht notwendig. Vielmehr können der Aktorstößel und die Steuermembran ersatzlos entfallen. Der Aufbau des Linearaktuators kann somit vereinfacht werden. Außerdem kann das Hydrolager kompakter ausgestaltet sein. Zudem kann die Masse des Linearaktuators bzw. des Hydrolagers verringert werden. Mit einer entsprechenden geringeren Masse des Linearaktuators und damit des Hydrolagers kann das dynamische Verhalten des Hydrolagers für einen vorbestimmten Frequenzbereich positiv beeinflusst werden. Insbesondere kann die reduzierte Masse des Linearaktuators bzw. der mit dem zugehörigen Anker fest gekoppelten Masse zu einem verbesserten hochfrequenten Verhalten führen. Schließlich ist es nicht unbedingt notwendig, dass der Linearaktuator des Hydrolagers Dichtungen benötigt. Denn der Spalt zwischen Stator und Anker kann von Flüssigkeit des Hydrolagers direkt gespeist sein. Dies erlaubt das Weglassen einer Dichtung zum Linearaktuator bzw. zwischen Stator und Anker. Eine Ermüdung von entsprechenden Dichtungen bzw. Dichtstellen zwischen Aktor und Steuermembran können somit vermieden werden.

In einer bevorzugten Ausführungsform ist der Anker im Querschnitt zumindest im Wesentlichen zylindrisch ausgebildet. Vorzugsweise ist der Anker im Querschnitt zumindest im Wesentlichen kreiszylindrisch ausgebildet. Eine derartige Ausgestaltungsform bietet den Vorteil, dass der Anker besonders kompakt ausgestaltet sein kann und zugleich eine große Wirkfläche durch die erste bzw. zweite Stirnfläche bereitstellen kann.

In einer bevorzugten Ausführungsform ist die Gleitlagerung von dem Linearaktuator gebildet. Dabei ist beispielsweise denkbar, dass Polflächen, die an dem Stator des Linearaktuators angeordnet sind, Gleitflächen für die Gleitlagerung bilden. Polflächen des Stators können dabei Mantelflächen des Stators sein, die dem Anker zugewandt sind. Insbesondere können radial innenseitige Mantelflächen des Stators radial außenseitigen Mantelflächen des Ankers zugewandt sein. Radial außenseitige Mantelflächen des Ankers können weitere Gleitflächen für die Gleitlagerung bilden. Der Anker kann Polflächen aufweisen, die die Mantelfläche des Ankers zumindest teilweise bilden können. Deshalb kann es vorgesehen sein, das Gleitflächen des Gleitlagers von den Polflächen des Ankers gebildet sind.

Insbesondere können an den Polflächen oder an den korrespondierenden Außenflächen Beschichtungen vorgesehen sein, die sodann die jeweilige Gleitfläche bilden. Vorzugsweise bildet die radial außenseitige Mantelfläche des Ankers eine Gleitfläche der Gleitlagerung. Vorzugsweise bildet eine radial innenseitige Mantelfläche des Stators eine Gleitfläche der Gleitlagerung. Vorzugsweise wirkt die radial außenseitige Mantelfläche des Ankers als eine erste Gleitfläche mit der radial innenseitigen Mantelfläche des Stators als eine zweite Gleitfläche zusammen. Beschichtungen von Gleitflächen können beispielsweise Weichmetalle, Weichmetalllegierungen, Kunststoffe, insbesondere Polytetrafluorethylen, Keramikwerkstoffen, Graphitwerkstoffe oder beliebige Kombinationen der vorgenannten Werkstoffe aufweisen und/oder davon gebildet sein. Es ist aber auch möglich, dass Beschichtungen und/oder Gleitflächen andere Werkstoffe mit geeigneten Gleitlagerungseigenschaften aufweisen. Durch die integrale Ausgestaltung der Gleitlagerung durch den Aktuator kann eine kompakte Bauform erreicht werden. Dies spart Gewicht und Bauraum.

In einer bevorzugten Ausführungsform ist die Gleitlagerung von der Flüssigkeit aus der Arbeitskammer und/oder dem Überstromkanal als Gleitflüssigkeit gespeist. Mit anderen Worten kann das Speisen der Gleitlagerung mit der Flüssigkeit eine Fluidschmierung mit der Gleitflüssigkeit beschreiben. Dabei kann die Flüssigkeit beispielsweise die Reibung der Gleitlagerung verringern. Insbesondere kann die Reibung zwischen einer radial innenseitigen Mantelfläche des Stators und einer radial außenseitigen Mantelfläche des Ankers mittels de Flüssigkeit verringert werden. Durch eine Verringerung der Reibung kann auch der Abrieb z.B. einer oder beider Gleitflächen der Gleitlagerung reduziert werden. Durch die reduzierte Reibung können die Leistungsverluste aufgrund einer Umwandlung von mechanischer Leistung in Wärme sinken. Derartige vorherige Leistungsverluste können nun umgekehrt als nutzbare Leistung dem Linearaktuator bereitstehen. Dadurch kann der Linearaktuator eine höhere Nutzkraft bereitstellen. Alternativ kann der Linearaktuator bei gleicher Leistung ein kompakteres Außenmaß bei geringerem Gewicht aufweisen.

Ein weiterer Vorteil der Fluidschmierung und der damit verbundenen Absenkung der Reibung und des Abriebs kann eine Erhöhung der Lebensdauer der Gleitlagerung sein. Daraus kann sich eine Erhöhung der Lebensdauer des Hydrolagers ergeben. Weiterhin kann aufgrund der Fluidschmierung und des reduzierten Materialabriebs z.B. der Gleitflächen eine abnutzungsbedingte Vergrößerung des Spalts zwischen den Gleitflächen verringert werden. Mit anderen Worten kann die Zunahme eines Lagerspiels der Gleitlagerung während der Lebensdauer der Gleitlagerung verringert werden.

Schließlich kann die Speisung der Gleitlagerung mit Flüssigkeit eine weitere, zusätzliche Dämpfung in lateraler Richtung bereitstellen. Eine solche zusätzliche laterale Dämpfung kann beispielsweise mögliche Resonanzeffekte aufgrund eines lateralen Lagerspiels reduzieren oder sogar unterdrücken.

Eine Speisung der Gleitlagerung mit der Flüssigkeit als Gleitflüssigkeit aus der Arbeitskammer und/oder dem Überstromkanal kann somit eine besonders geringe Reibung erlauben. Eine geringe Reibung wiederum kann die Lebensdauer des Hydrolagers erhöhen.

In einer bevorzugten Ausführungsform ist die Gleitlagerung als ein durch die Flüssigkeit geschmiertes Festkörpergleitlager ausgebildet. Festkörpergleitlager, die mit einer Flüssigkeit geschmiert sind, d.h. eine Flüssigkeitsschmierung durch die Gleitflüssigkeit aufweisen, können sich durch eine hohe Langlebigkeit und niedrige Energieverluste auszeichnen.

In einer bevorzugten Ausführungsform bildet ein Spalt der Gleitlagerung einen Bypasskanal zwischen der Arbeitskammer und dem Überstromkanal. Dies erlaubt eine konstruktiv besonders einfache und zugleich robuste Ausgestaltung des Linearaktuators. Der Bypasskanal kann einen wenn auch nur sehr kleinen Transport von Flüssigkeit zwischen der Arbeitskammer und dem Überstromkanal ermöglichen. Die Gleitlagerung kann dadurch von Flüssigkeit durchströmt werden. Das Durchströmen mit Flüssigkeit kann auch möglich sein, wenn der Bypasskanal nur sehr "klein" und/oder "schmal" ist. Dies bietet den Vorteil, dass möglicher Abrieb des Gleitlagers durch den Flüssigkeitsaustausch abtransportiert wird.

In einer bevorzugten Ausführungsform ist der Fluidwiderstand des Bypasskanals um mindestens das 10-fache größer als ein Fluidwiderstand des Drosselkanals und/oder des Überstromkanals. Der Bypasskanal kann deshalb auch als parasitärer Bypasskanal bezeichnet und/oder ausgebildet sein. Aufgrund des vielfach geringeren Fluidwiderstands kann die Flüssigkeit wesentlich einfacher durch den Drosselkanal und/oder den Überstromkanal strömen. Der Fluidwiderstand kann auch als Strömungswiderstand bezeichnet werden. Der Drosselkanal und/oder der Überstromkanal können somit einen bevorzugten Transportweg der Flüssigkeit darstellen. Dies kann den Vorteil bieten, dass der Bypasskanal zumindest im Wesentlichen keinen Einfluss auf das dynamische Systemverhalten des Hydrolagers hat. Denn durch den Bypasskanal kann allenfalls eine sehr kleine Menge Flüssigkeit strömen. Gleichzeitig kann der Bypasskanal jedoch eine Schmierung der Gleitlagerung ermöglichen.

In einer bevorzugten Ausführungsform ist der Linearaktuator teilweise in das Ende des Überstromkanals derart eingefasst, dass der Stators fluiddicht an einer Kanalwandung des Überstromkanals angeordnet ist. Eine Auslenkung des Ankers ruft deshalb eine Flüssigkeitsströmung im Überstromkanal hervor, und zwar unmittelbar und ohne eine elastische Verzögerung. Eine solche Ausgestaltung ermöglicht eine kompakte Bauweise. Zudem kann durch eine solche Bauweise die Masse des Hydrolagers reduziert werden.

Eine vorteilhafte Ausgestaltung zeichnet sich dadurch aus, das, insbesondere nur, der Anker mit einem ankerstirnseitigen Ende in das entsprechende Ende des Überstromkanals einfasst, so dass der Anker wie ein Pumpenkolben und das Ende des Überstromkanals wie ein Pumpenzylinder zusammenwirken. Der Anker kann also eine Verdrängung von Flüssigkeit im Überstromkanal hervorrufen, so dass die entsprechende Menge an Flüssigkeit in die Ausgleichkammer entweicht.

In einer bevorzugten Ausführungsform ist zumindest ein Teil des Drosselkanals integral mit dem Stator ausgebildet, oder umgekehrt. So kann der Stator eine kanalförmige Ausnehmung aufweisen, die sodann die Teile des Drosselkanals bilden. In diesem Fall kann der übrige Drosselkanal durch andere Teile des Hydrolagers gebildet sein.

In einer bevorzugten Ausführungsform ist die zweite Ankerstirnseite der Tragfeder zugewandt und die erste Ankerstirnseite von der Tragfeder abgewandt. Dies entspricht dem invertierten Hydrolagertyp. In diesem Fall kann die erste Stirnseite, die der Tragfeder abgewandt ist, eine Unterseite des Ankers und die zweite Stirnseite eine Oberseite des Ankers bilden. Die Arbeitskammer ist derart geformt ausgebildet, dass sich die Arbeitskammer zumindest bis zu ersten Ankerstirnseite erstreckt, insbesondere auch dann, wenn die erste Ankerstirnseite die Unterseite des Ankers bildet. Die Flüssigkeit aus der Arbeitskammer hat dann unmittelbaren Kontakt zur ersten Ankerstirnseite bzw. zur Unterseite des Ankers. Dadurch kann der Anker bei einer Abwärtsbewegung der Tragfeder beispielsweise eine aufwärtsgerichtete Auslenkung ausführen. Die zweite Ankerstirnseite kann dazu ausgebildet sein, wie eine Kolbenfläche eines Kolbens unmittelbar auf die Flüssigkeit im Überstromkanal einzuwirken. Mit dieser Auslenkung kann die zweite Ankerstirnseite, die vorzugsweise die Oberseite des Ankers ist, wie eine Kolbenfläche auf die Flüssigkeit im Überstromkanal wirken. Dadurch strömt Flüssigkeit aus dem Überstromkanal in die Ausgleichskammer.

In einer bevorzugten Ausführungsform ist der Arbeitskammer mindestens ein Umströmkanal zugeordnet, der sich bis zu der ersten Ankerstirnseite erstreckt. Dabei bildet der Innenraum des mindestens einen Umströmkanals vorzugsweise einen Teil des Innenraums der Arbeitskammer. Mit anderen Worten kann der mindestens eine Umströmkanal von der Arbeitskammer gebildet werden. Mit Hilfe des Umströmkanals kann die erste Ankerstirnseite, die von der Tragfeder beim invertierten Hydrolagertyp abgewandt sein kann, bei einer Bewegung der Tragfeder von der Flüssigkeit aus der Arbeitskammer in Richtung der zweiten Ankerstirnseite angeströmt werden.

In einer bevorzugten Ausführungsform ist die erste Ankerstirnseite der Tragfeder zugewandt und die zweite Ankerstirnseite von der Tragfeder abgewandt. Eine solche Anordnung kann als nicht-invertierter Hydrolagertyp bezeichnet sein. Ein Umströmkanal kann in diesem Fall nicht notwendig sein, da die Flüssigkeit aufgrund der Bewegung der Tragfeder bereits in Richtung der ersten Ankerstirnseite bewegt werden kann und nicht zuvor umgeleitet werden muss. Die zweite Ankerstirnseite kann dazu ausgebildet sein, wie eine Kolbenfläche eines Kolbens unmittelbar auf die Flüssigkeit im Überstromkanal einzuwirken. Auf die vorangegangenen Erläuterungen wird deshalb verwiesen und vorzugsweise in analoger Weise Bezug genommen.

In einer bevorzugten Ausführungsform ist der Anker mittels Federn in einer Ausgangslage vorgespannt. Die Ausgangslage kann die Lage des Ankers beschreiben, bei der der Anker keine elektromagnetische Wechselwirkung mit dem Stator erfährt. Der Anker des Linearaktuators kann durch eine elektromagnetische Wechselwirkung mit dem Stator bei einer Auslenkung um die Ausgangslage herum ausgelenkt werden.

Bevorzugt können eine erste und eine zweite Feder den Anker in der Ausgangslage vorspannen. Beispielsweise kann die erste Feder zwischen der ersten Ankerstirnseite und einem Wandungsabschnitt der Arbeitskammer gespannt sein. Die zweite Feder kann zwischen der zweiten Ankerstirnseite und einem Gehäuseabschnitt des Hydrolagers gespannt sein. Eine umgekehrte Ausgestaltung ist ebenfalls möglich.

Durch die Vorspannung des Ankers mit Federn kann eine Bewegung des Ankers sowohl in Auslenkrichtung als auch entgegen der Auslenkrichtung gegen eine entsprechende Federkraft ermöglicht sein. Bevorzugt kann der Anker seine Ausgangsposition in der Ausgangslage wiederholbar und/oder reproduzierbar nach einer Auslenkbewegung einnehmen. Schließlich kann mit Hilfe der Federn die Steifigkeit des Linearaktuators vorbestimmt werden. Da der Anker des Linearaktuators z.B. in Auslenkrichtung vorgespannt sein kann, muss der Anker bei einer Auslenkung wenigstens entgegen der Federkraft einer Feder bewegt werden.

In einer bevorzugten Ausführungsform sind die Federn als Schraubenfedern, insbesondere Schraubendruckfedern, ausgebildet. Schraubfedern, insbesondere Schraubendruckfedern, können mechanisch kostengünstige und zuverlässige Federn mit einer hohen Lebensdauer sein. Die Verwendung von Schraubenfedern, insbesondere von Schraubendruckfedern, kann somit die Lebensdauer des Hydrolagers erhöhen. Es ist aber auch möglich, dass andere Federtypen verwendet werden. Beispielsweise können die Federn als Membranfedern ausgebildet sein.

Gemäß einem zweiten Aspekt der Erfindung wird die eingangs genannte Aufgabe gelöst durch einen Motor gemäß Anspruch 15. Die vorliegende Erfindung betrifft auch einen Motor mit einem Hydrolager wie zuvor beschrieben, wobei das Hydrolager derart mit dem Motor verbunden ist, so dass der Motor mittels des Hydrolagers an einem anderen Bauteil gelagert befestigbar ist.

Bezüglich des Hydrolagers wird auf die vorangegangen Erläuterungen, bevorzugten Ausgestaltungen, vorteilhaften Merkmale, Vorteile und/oder Effekte in analoger Weise Bezug genommen, wie sie für das Hydrolager gemäß dem ersten Aspekt der Erfindung bzw. dem zugehörigen Ausgestaltungen erörtert worden sind. Von einer Wiederholung wird an dieser Stelle deshalb abgesehen.

Gemäß einem dritten Aspekt der Erfindung wird die eingangs genannte Aufgabe gelöst durch ein Kraftfahrzeug mit den Merkmalen des Anspruchs 16. Vorgesehen ist also ein Kraftfahrzeug, insbesondere ein Auto, aufweisend ein Hydrolager wie es beispielsweise zuvor beschrieben wurde, insbesondere gemäß dem ersten Aspekt der Erfindung und/oder einem der zugehörigen Ausführungsformen. Außerdem ist ein Motor, ein Getriebe und/oder ein anderes Bauteil des Kraftfahrzeugs mittels des entsprechenden Hydrolagers an einem weiteren Bauteil des Fahrzeugs, insbesondere der Karosserie oder einem damit verbundenen Bauteil, gelagert befestigt.

Bezüglich des Hydrolagers wird auf die vorangegangen Erläuterungen, bevorzugten Ausgestaltungen, vorteilhaften Merkmale, Vorteile und/oder Effekte in analoger Weise Bezug genommen, wie sie für das Hydrolager gemäß dem ersten Aspekt der Erfindung bzw. dem zugehörigen Ausgestaltungen erörtert worden sind. Von einer Wiederholung wird an dieser Stelle deshalb abgesehen.

Weitere Merkmale, Vorteile und Anwendungsmöglichkeiten der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in beliebiger Kombination den Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte. Dabei zeigt
- Figur 1: eine vorteilhafte Ausgestaltung eines Hydrolagers in einer schematischen Querschnittsansicht,
- Figur 2: die vorteilhafte Ausgestaltung des Hydrolagers aus Fig. 1 in einer Detailansicht eines unteren Abschnitts,
- Figur 3a, b: die vorteilhafte Ausgestaltung des Hydrolagers aus Fig. 1 jeweils in einer perspektivische Aufsicht auf ein Mittelbauteil des Hydrolagers,
- Figur 4: eine vorteilhafte Ausgestaltung eines invertierten Hydrolagers in einer schematischen Querschnittsansicht,
- Figur 5: eine vorteilhafte Ausgestaltung eines nicht-invertierten Hydrolagers in einer schematischen Querschnittsansicht, und
- Figur 6: eine vorteilhafte Ausgestaltung eines Kraftfahrzeugs mit Hydrolagern in einer schematischen Seitenansicht.

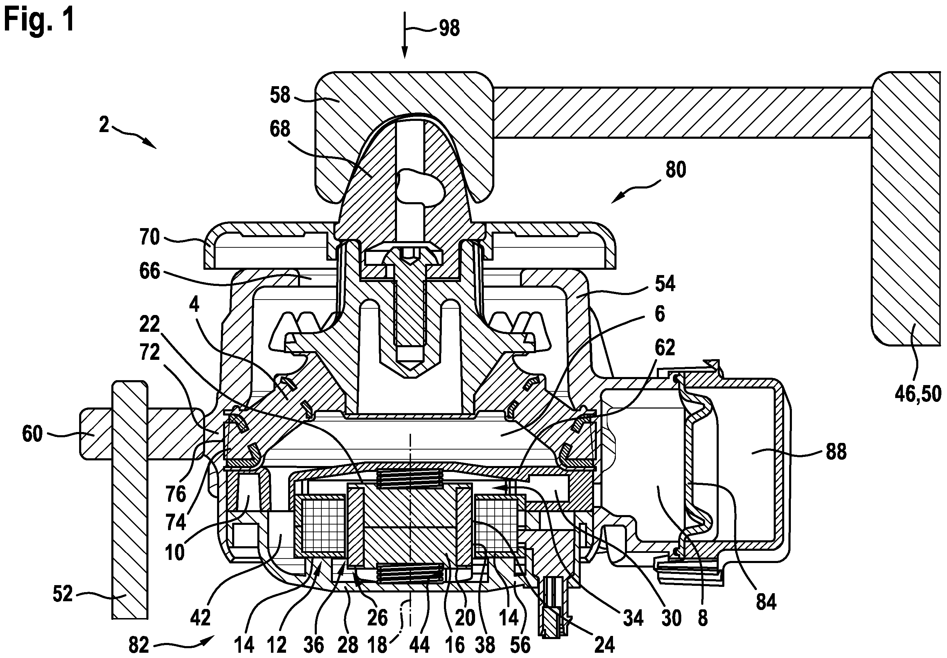

Figur 1 zeigt ein Hydrolager 2 in einer schematischen Querschnittsdarstellung. Das Hydrolager 2 ist bevorzugt als aktives, invertiertes Hydrolager 2 ausgestaltet. Das Hydrolager 2 weist ein Gehäuse auf. Das Gehäuse weist ein oberes Gehäuseteil 54 und ein unteres Gehäuseteil 56 auf. In dem oberen Gehäuseteil 54 ist eine verformbare Tragfeder 4 dichtend eingefasst. Bevorzugt ist die Tragfeder 4 elastisch verformbar. An einem oberen Ende 80 weist das Hydrolager 2 eine Öffnung 66 auf, durch die die Tragfeder 4 mit einem oberen Montageende 68 verbindbar ist. Das obere Montageende 68 dient zum Befestigen oder Verbinden der Tragfeder 4 mit einer Einheit, die gelagert werden soll. Vorzugsweise kann das obere Montageende 68 über ein erstes Verbindungselement 58 mit einem Motor oder einem Getriebe verbunden werden.

Das Hydrolager 2 weist eine von der Tragfeder 4 zumindest teilweise umschlossene Arbeitskammer 6 auf. Dazu kann die Tragfeder 4 auf einer Seite, die von dem oberen Montageende 68 abgewandt ist, konkav ausgebildet sein. Ein durch die konkave Ausgestaltung der Tragfeder 4 gebildeter Hohlraum kann zumindest teilweise die Arbeitskammer 6 mitbilden. Die Arbeitskammer 6 ist mit einer Flüssigkeit gefüllt. Vorzugsweise ist die Flüssigkeit eine inkompressible Flüssigkeit, z.B. Glykol. Die verformbare Tragfeder 4 beaufschlagt die Arbeitskammer 6 bei einer Verformung der Tragfeder 4 mit einem Druck.

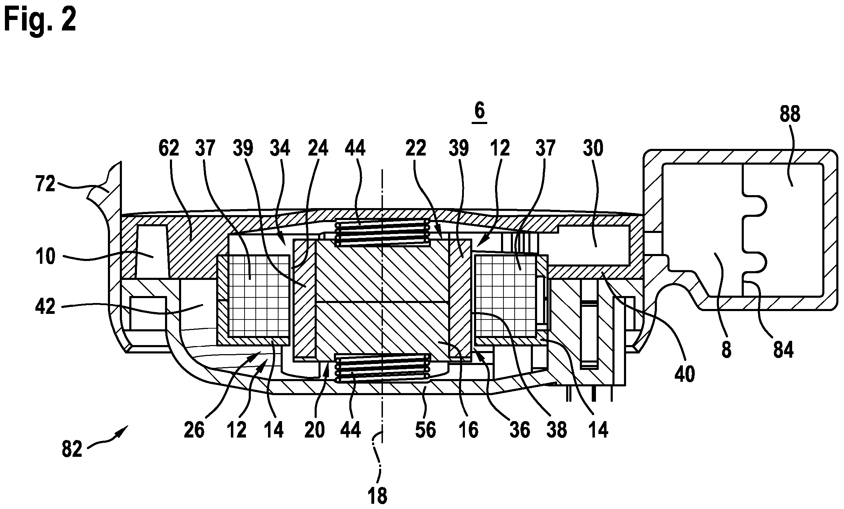

Für die weitere Erläuterung wird auf eine Zusammenschau der Fig. 1 und 2 verwiesen. Unterseitig zu der Tragfeder 4 ist ein Mittelbauteil 62 angeordnet. Das Mittelbauteil 62 weist einen Drosselkanal 10 zum Austausch von Flüssigkeit auf. Der Drosselkanal 10 erstreckt sich zwischen der Arbeitskammer 6 und einer Ausgleichskammer 8. Der Drosselkanal 10 ist mit der Arbeitskammer 6 und der Ausgleichskammer 8 in Fluidverbindung. Die Ausgleichskammer 8 ist durch eine verformbare Membran 84 von einem Bereich 88 abgetrennt, in den sich die Membran 84 bzw. die Ausgleichskammer 8 bei einer Druckerhöhung in der Ausgleichskammer 8 ausdehnen kann. Vorzugsweise ist die Membran 84 elastisch verformbar. Bei einer Beaufschlagung der Arbeitskammer 6 bzw. der Flüssigkeit in der Arbeitskammer 6 mit einem Druck durch eine Verformung der Tragfeder 4 kann die Flüssigkeit aus der Arbeitskammer 6 durch den Drosselkanal 10 in die Ausgleichskammer 8 strömen und/oder entweichen. Der Drosselkanal 10 weist einen Strömungswiderstand auf. Durch den Strömungswiderstand kann ein Teil einer Bewegungsenergie der strömenden Flüssigkeit in eine andere Energieform umgewandelt werden. Dadurch kann ein Teil des Drucks in der Arbeitskammer 6, insbesondere Druckspitzen, bei einer Verformung der Tragfeder 4 umgeleitet und/oder gedämpft werden.

Wie beispielshaft aus Fig. 2 zu entnehmen ist, ist ein Linearaktuator 12 zumindest teilweise unterhalb des Mittelbauteils 62 angeordnet. Der Linearaktuator 12 ist ein elektromagnetisch wirkender Linearaktuator. Der Linearaktuator 12 weist eine erste und eine zweite Aktuatorseite 26, 34 auf. Der Linearaktuator 12 umfasst einen Stator 14 und einen Anker 16. Der Anker 16 ist in Bezug zu dem Stator 14 mittels einer Gleitlagerung 24 gelagert und entlang einer Auslenkachse 18 auslenkbar. Der Anker 16 weist eine erste und eine zweite Ankerstirnseite 20, 22 auf. Die zweite Ankerstirnseite 22 liegt der ersten Ankerstirnseite 20 gegenüber.

Somit umfasst die erste Aktuatorseite 26 die erste Ankerstirnseite 20. Die erste Ankerstirnseite 20 des Ankers 16 ist mit der Arbeitskammer 6 in Fluidkontakt. Mit anderen Worten ist die erste Ankerstirnseite 20 des Ankers 16 im direkten Kontakt mit der Flüssigkeit der Arbeitskammer 6. Denn die erste Ankerstirnseite 20 begrenzt einen Abschnitt der Arbeitskammer 6. In diesem Zusammenhang sei bereits erwähnt, dass sich die Arbeitskammer 6 nicht nur auf den Raum unter der konkaven Ausgestaltung der Tragfeder 4 beschränkt. Vielmehr kann auch ein Umströmkanal 42 der Arbeitskammer 6 zugeordnet sein oder von der Arbeitskammer 6 gebildet sein. Hierauf soll jedoch erst später im Detail eingegangen werden.

Der Linearaktuator 12 kann durch eine Auslenkung des Ankers 16, insbesondere mittels der ersten Ankerstirnseite 20, das Volumen der Arbeitskammer 6 vergrößern oder verkleinern. Beispielsweise kann der Linearaktuator 12 das Volumen der Arbeitskammer 6 durch eine Auslenkung des Ankers 16 in Richtung des Mittelbauteils 62 vergrößern. Beispielsweise kann der Linearaktuator 12 das Volumen der Arbeitskammer 6 durch eine Auslenkung des Ankers 16 in einer Richtung, die dem Mittelbauteil 62 entgegengesetzt ist, vergrößern. Durch die Vergrößerung bzw. Verkleinerung des Volumens der Arbeitskammer 6 kann der Linearaktuator 12 den Druck in der Arbeitskammer 6 erniedrigen bzw. erhöhen. Dadurch kann die erste Ankerstirnseite 20 die Flüssigkeit in der Arbeitskammer 6 bei einer Auslenkung des Ankers 16 unmittelbar und direkt mit einem Druck beaufschlagen oder einen von der Tragfeder 4 verursachten Druck teilweise kompensieren. Die erste Ankerstirnseite 20 kann daher als Kolbenfläche wirken und/oder entsprechend ausgebildet sein.

Die zweite Aktuatorseite 34 umfasst die zweite Ankerstirnseite 22. Das Hydrolager 2 weist außerdem einen Überstromkanal 30 auf, der sich von der Ausgleichskammer 8 zu einem Ende erstreckt. Mit der Ausgleichskammer 8 ist der Überstromkanal in Fluidverbindung. Somit kann Flüssigkeit durch den Überstromkanal 30 in die Ausgleichskammer 8, oder umgekehrt, strömen. Vorzugsweise ist der Überstromkanal 30 von dem Mittelbauteil 62 gebildet. Insbesondere begrenzt ein unterseitiger Abschnitt des Mittelbauteils 62 das Ende des Überstromkanals 30. Das Ende des Überstromkanals 30 kann kammerartig ausgebildet sein. Der Überstromkanal 30 steht nicht im unmittelbaren Fluidkontakt mit der Arbeitskammer 6. Vielmehr ist der Überstromkanal 30 zumindest im Wesentlichen nur mit der Ausgleichskammer 8 zum Austausch von Flüssigkeit verbunden. Der Linearaktuator 12 ist an dem Ende des Überstromkanals 30 angeordnet. Dadurch ist die zweite Ankerstirnseite 22 in einem direkten Fluidkontakt mit der Flüssigkeit aus dem Überstromkanal 30. Die zweite Ankerstirnseite 22 kann die Flüssigkeit in dem Überstromkanal 30 bei einer Auslenkung des Ankers 16 mit einem Druck beaufschlagen und in die Ausgleichskammer 8 transportieren. Die zweite Ankerstirnseite 22 kann als Kolbenfläche wirken und/oder entsprechend ausgebildet sein. Mit anderen Worten verdrängt die zweite Ankerstirnseite 22 zumindest einen Teil der Flüssigkeit aus dem Überstromkanal 30, wenn die erste Ankerstirnseite 20, die der zweiten Ankerstirnseite 22 gegenüberliegt, das Volumen der Arbeitskammer 6 vergrößert. Umgekehrt gilt Entsprechendes. Durch die Druckbeaufschlagung und den Transport der Flüssigkeit aus dem Überstromkanal 30 in die Ausgleichskammer 8 und nicht in die Arbeitskammer 6 trägt die zweite Ankerstirnseite 22 zumindest im Wesentlichen nicht unmittelbar zum Druck in der Arbeitskammer 6 bei. Allenfalls ein sehr kleiner Einfluss kann bestehen, der jedoch vernachlässigbar ist.

Der Linearaktuator 12 kann somit direkt und unmittelbar über eine Auslenkung des Ankers 16 den Druck der Flüssigkeit in der Arbeitskammer 6 beeinflussen. Entsprechendes kann somit für die Steifigkeit des Hydrolagers 2 gelten. Die Druckbeaufschlagung oder Drucckompensation erfolgt direkt und unmittelbar über die erste Ankerstirnfläche 20, die im unmittelbaren Kontakt mit der Flüssigkeit aus der Arbeitskammer 6 bzw. dem zugehörigen Umströmkanal 42 ist. Der einfache Aufbau des Linearaktuators 12 und dessen Anordnung im direkten Flüssigkeitskontakt ermöglicht somit eine deutlich kleinere Bauform des Hydrolagers 2. Zudem kann eine Masse des Linearaktuators 12 und somit auch des Hydrolagers 2 deutliche verringert werden. Die geringere Masse kann eine Eigenfrequenz des Hydrolagers 2 positiv beeinflussen, insbesondere führt die reduzierte Masse zu einem verbesserten hochfrequenten Verhalten. Die geringere Masse kann daher vorteilhaft die aktiven Dämpfungseigenschaften des Hydrolagers 2 ändern.

Am oberen Ende 80 des Hydrolagers 2 ist vorzugsweise ein weiteres Bauteil 70 angeordnet. Hierbei handelt es sich vorzugsweise um einen Druckanschlag. Zusätzlich kann diese Bauteil 70 eine Funktion als Hitzeschutzkappe gewährleisten, um die Gummikomponenten von Hitzestrahlung des Motors zu schützen.

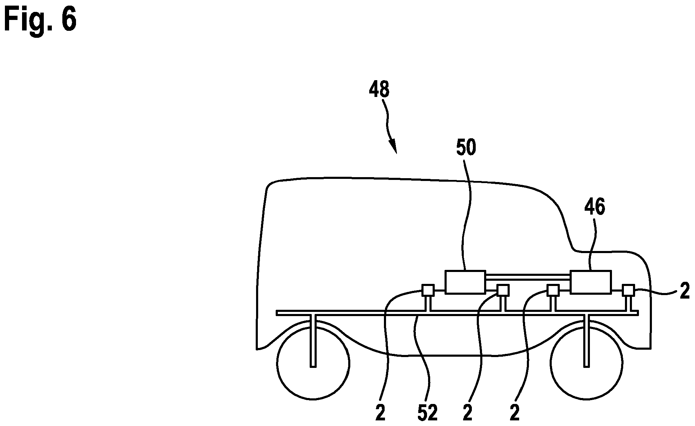

Der obere Gehäuseteil 54 weist ein seitliches Montageende 72 auf. Das seitliche Montageende 72 kann in der praktischen Anwendung mit einer Einheit verbunden werden, an der die zu lagernde Einheit gelagert werden soll. Vorzugsweise kann das seitliche Montageende 72 über ein zweites Verbindungselement 60 mit einer Karosserie 52 eines Kraftfahrzeugs 48 (siehe Fig. 6) verbunden werden. Das seitliche Montageende 72 wirkt als Widerlager gegenüber externen Kräften, die auf das obere Montageende 68 und damit auf die Tragfeder 4 z.B. in eine Richtung 98 wirken. Ein Beispiel für externe Kräfte, die auf die Tragfeder 4 wirken, können Vibrationen des Motors 46 im Betrieb sein.

Die Ausgleichskammer 8 des Hydrolagers 2 ist zusammen mit einem Mittelbauteil 62 und dem unteren Gehäuseteil 56 in Fig. 2 im Detail schematisch gezeigt. Die Ausgleichskammer 8 ist vorzugweise in einem Bereich zwischen dem oberen Ende 80 des Hydrolagers 2 und einem unteren Ende 82 des Hydrolagers 2 seitlich angeordnet. Die Ausgleichskammer 8 kann beispielsweise in einem Bereich angeordnet sein, der dem seitlichen Montageende 72 gegenüberliegt.

Der Anker 16 des Linearaktuators 12 ist wenigstens zum Teil innerhalb eines Abschnitts einer durchgehenden Aufhahmeöffhung des Stators 14 des Linearaktuators 12 aufgenommen. Der Anker 16 erstreckt sich in einer Auslenkrichtung von der ersten Ankerstirnseite 20 zu der gegenüberliegenden zweiten Ankerstirnseite 22. Die Auslenkrichtung ist parallel zu einer Auslenkachse 18. Der Anker 16 ist an dem Stator 14 mittels der Gleitlagerung 24 gelagert. Dadurch ist der Anker 16 bei einer elektromagnetischen Wechselwirkung mit dem Stator 14 in Auslenkrichtung entlang der Auslenkachse 18 auslenkbar. Der zumindest teilweise in dem Stator 14 einfassende Anker 16 kann beispielsweise im Querschnitt zumindest im Wesentlichen zylindrisch ausgebildet sein. Der Anker 16 kann also eine zylindrische Form aufweisen. Unter "zylindrisch" ist nicht notwendigerweise eine kreiszylindrische Form zu verstehen, obwohl dies bevorzugt ist.

Der Anker 16 des Linearaktuators 12 ist in einer Ausgangslage, wie sie beispielhaft in Fig. 2 gezeigt ist, mit Hilfe von Federn 44 vorgespannt. Die Federn 44 können dabei als Schraubenfedern, insbesondere als Schraubendruckfedern, ausgebildet sein.

Der Stator 14 kann beispielsweise eine hohlzylindrische Form aufweisen. Es ist aber auch denkbar, dass der Stator 14 wenigstens zwei Elemente aufweisen kann. Beispielsweise können die wenigstens zwei Elemente in Richtung der Auslenkachse 18 des Ankers 16 konkav geformt sein. Der Anker 16 kann koaxial in dem Stator 14 einfassen und/oder angeordnet sein.

Der Stator 14 kann mindestens eine Spule 37 aufweisen. Der Anker 16 kann mindestens einen Magneten 39 aufweisen. Eine umgekehrte Ausgestaltung ist ebenfalls möglich. Der Einfachheit halber wird aber im Folgenden und rein beispielhaft auf die zuvor genannte Ausgestaltung Bezug genommen, ohne Einschränkung des allgemeinen Erfindungsgedankens. Zur Auslenkung des Ankers 16 fließt ein Strom durch die mindestens eine Spule 37 des Stators 14. Der Stromfluss in der mindestens einen Spule 37 erzeugt ein Magnetfeld im Bereich des Ankers 16, insbesondere in dem Bereich des mindestens einen Magneten 39 des Ankers 16. Der mindestens eine Magnet 39 des Ankers 16 wechselwirkt mit dem Magnetfeld der mindestens einen Spule 37 des Stators 14. Dadurch wirkt eine Kraft auf den mindestens einen Magneten 39 des Ankers 16. Die Folge ist eine Auslenkung des Ankers 16 entlang der Auslenkachse 18 aus der Ausgangslage heraus.

Die Gleitlagerung 24 ist vorzugsweise von dem Linearaktuator 12 gebildet. Eine innere Mantelfläche des Stators 14 und eine äußere Mantelfläche des Ankers 16 können jeweils Gleitflächen bilden. Die Gleitflächen können einander zugewandt sein. Die Gleitlagerung 24 kann beispielsweise als ein Festkörpergleitlager ausgebildet sein. Das Festkörpergleitlager kann durch die Flüssigkeit in dem Hydrolager 2 geschmiert und/oder gespeist sein. Eine solche Flüssigkeitsschmierung kann vorzugsweise derart realisiert sein, dass ein Spalt 36 der Gleitlagerung 24 einen Bypasskanal 38 zwischen dem Stator 14 und dem Anker 16 bzw. zwischen den Gleitflächen bildet. Der Bypasskanal 38 verbindet die Arbeitskammer 6 über den zugehörigen Umströmkanal 42 mit dem Überstromkanal 30. Der Fluidwiderstand des Bypasskanals 38 ist jedoch hoch, beispielsweise um mindestens das Zehnfache größer als ein Fluidwiderstand oder Strömungswiderstand des Drosselkanals 10 oder des Überstromkanals 30. Damit ist es möglich, dass die Gleitlagerung 24 von der Flüssigkeit aus der Arbeitskammer 6 und/oder dem Überstromkanal 30 als Gleitflüssigkeit gespeist ist. Gleichzeitig ist die Änderung der Strömungsdynamik in dem Hydrolager 2 aufgrund des vielfach höheren Fluidwiderstands des Bypasskanals 38 nicht wesentlich beeinflusst.

Das invertierte Hydrolager 2 in Fig. 1 weist drei Kanäle auf: den Drosselkanal 10, den Überstromkanal 30 und den Umströmkanal 42, wobei der Umströmkanal 42 integral von der Arbeitskammer 6 gebildet und/oder dieser zugeordnet ist.

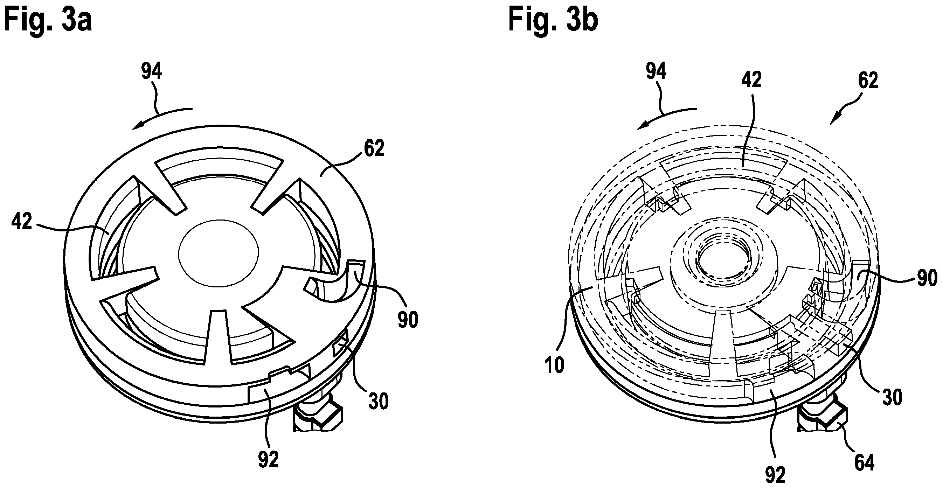

Der Drosselkanal 10 ist zumindest im Wesentlichen in dem Mittelbauteil 62 ausgebildet. Das Mittelbauteil 62 des Hydrolagers ist im Detail in den Figuren 3a und 3b in einer perspektivischen Ansicht gezeigt. Dabei zeigt Fig. 3a eine perspektivische Draufsicht auf das Mittelbauteil 62. Figur 3b zeigt dieselbe Ansicht aus Fig. 3a jedoch in einer teiltransparenten Darstellung, wodurch die in dem Mittelbauteil 62 angeordneten Kanäle gezeigt sind.

Der Drosselkanal 10 erstreckt sich im Wesentlichen in einer Umfangsrichtung 94 des Mittelbauteils 62. Der Drosselkanal 10 weist eine erste und eine zweite Öffnung 90, 92 auf. Die erste Öffnung 90 ist der Tragfeder 4 zugewandt. Die erste Öffnung 90 verbindet die Arbeitskammer 6 mit dem Drosselkanal 10 zum Austausch von Flüssigkeit. Die zweite Öffnung 92 verbindet den Drosselkanal 10 mit der Ausgleichskammer 8 zum Austausch von Flüssigkeit.

Der Überstromkanal 30 ist den Fig. 1, 2, 3a und 3b gezeigt. Die zweite Ankerstirnseite 22 und der unterseitige Abschnitt des Mittelbauteils 62 begrenzen das Ende des Überstromkanals 30. Der Überstromkanal 30 ist mit der Ausgleichskammer 8 zum Austausch von Flüssigkeit verbunden. Der Linearaktuator 12 bzw. der Stator 14 des Linearaktuators 12 ist teilweise in das Ende des Überstromkanals 30 eingefasst.

Die Einfassung des Linearaktuators 12 in das Ende des Überstromkanals 30 ist derart, dass der Stator 14 fluiddicht an einer Kanalwandung des Überstromkanals 30 angeordnet ist. Mit anderen Worten schließt ein Abschnitt des Stators 14 umlaufend und fluiddicht an die Kanalwandung des Überstromkanals 30 an. Durch die endseitige teilweise Begrenzung des Überstromkanals 30 durch den Stator sind keine gesonderten Bauteile notwendig. Dadurch wird die Masse des Hydrolagers 2 vorteilhaft verringert.

Wie bereits erwähnt weist das Hydrolager 2 mindestens einen Umströmkanal 42 auf. Der mindestens eine Umströmkanal 42 ist der Arbeitskammer 6 zugeordnet. Vorzugsweise bildet der Innenraum des mindestens einen Umströmkanals 42 einen Teil des Innenraums der Arbeitskammer 6, oder umgekehrt. Somit kann davon gesprochen werden, dass der mindestens eine Umströmkanal 42 von der Arbeitskammer 6 gebildet ist. Der mindestens eine Umströmkanal 42 erstreckt sich durch das Mittelbauteil 62 bis zu der ersten Aktuatorseite 26. Damit erstreckt sich der mindestens eine Umströmkanal 42 von dem unter der Tragfeder 4 angeordneten Teil der Arbeitskammer 6 zur ersten Ankerstirnseite 20. Dadurch stellt der mindestens eine Umströmkanal 42 eine Fluidverbindung zwischen dem genannten Teil der Arbeitskammer 6 und der ersten Ankerstirnseite 20 her. Dadurch kann die Flüssigkeit bei einer Verformung der Tragfeder direkt zu der ersten Ankerstirnfläche 20 strömen.

Bei dem in Fig. 1 gezeigten invertierten Hydrolager 2 ist die zweite Ankerstirnseite 22 der Tragfeder 4 zugewandt.

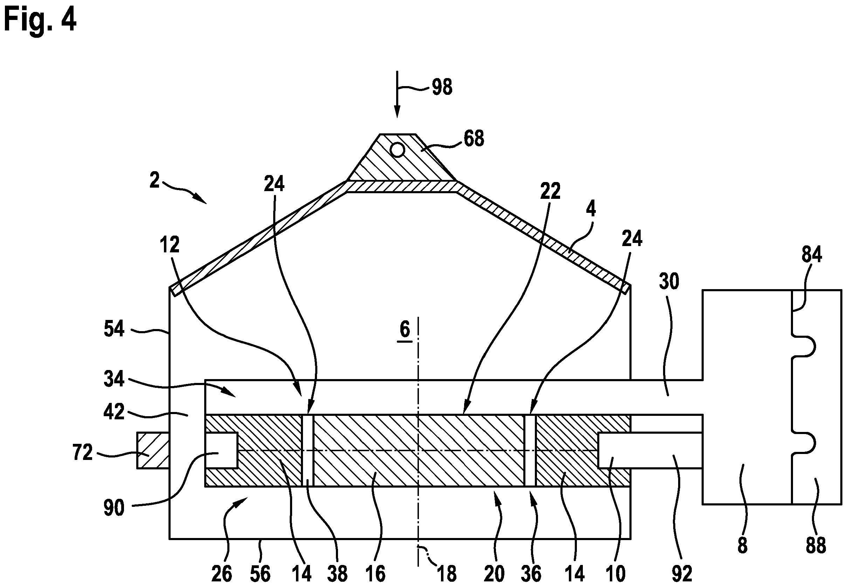

Im Folgenden wird die Funktionsweise des invertierten Hydrolagers anhand von Fig. 4 beschrieben. Figur 4 zeigt eine schematische Querschnittsansicht des in den Fig. 1 bis 3 beschriebenen invertierten Hydrolagers.

In Fig. 4 ist das obere Montageende 68 beispielsweise mit einem Motor 46 eines Kraftfahrzeugs 48 verbunden. Das seitliche Montageende 72 ist beispielsweise mit einer Karosserie 52 des Kraftfahrzeugs 48 verbunden. Das seitliche Montageende 72 wirkt als Widerlager gegenüber externen Kräften, die auf das obere Montageende 68 und damit auf die Tragfeder 4 z.B. in eine Richtung 98 wirken. Ein Beispiel für externe Kräfte, die auf die Tragfeder 4 wirken, können Vibrationen des Motors 46 im Betrieb sein.

In einem Ausgangszustand wirkt keine dynamische, externe Kraft auf die Tragfeder 4. Der Anker 16 des Linearaktuators 12 ist nicht ausgelenkt und ist in einer Ausgangslage. Der Anker 16 des Linearaktuators 12 kann ausgelenkt werden, indem ein Strom durch die mindestens eine Spule 37 des Stators 14 fließt. Ein Strom in der mindestens einen Spule 37 des Stators 14 erzeugt ein Magnetfeld im Bereich des Ankers 16, insbesondere im Bereich des mindestens einen Magneten 39. Der mindestens eine Magnet des Ankers 16 wechselwirkt mit dem Magnetfeld, das durch die mindestens eine Spule des Stators 14 erzeugt wird. Durch die Wechselwirkung erfährt der Anker 16 eine Auslenkung aus einer Ausgangslage.

Wirkt eine Kraft auf die Tragfeder 4 in Richtung 98, z.B. durch eine Motorvibration, wird die Tragfeder 4 elastisch in Richtung 98 bewegt und dabei verformt. Dadurch beaufschlagt die Tragfeder 4 die Flüssigkeit in der Arbeitskammer 6 mit einem Druck. Eine Beaufschlagung mit einem Druck kann eine Druckerhöhung oder Druckverringerung umfassen. Wirkt eine Kraft auf die Tragfeder 4 in Richtung 98 und verformt sich die Tragfeder 4 dadurch, erhöht sich der Druck der Flüssigkeit in der Arbeitskammer 6.Danach führt die Tragfeder 4 oftmals eine elastische Rückstellbewegung aus. In diesem Fall verringert sich der Druck der Flüssigkeit in der Arbeitskammer 6.

Die mit Druck beaufschlagte Flüssigkeit in der Arbeitskammer 6 kann im Wesentlichen durch den Drosselkanal 10 strömen. Dabei strömt die Flüssigkeit von der Arbeitskammer 6 durch die erste Öffnung 90 in den Drosselkanal 10 und schließlich durch die zweite Öffnung 92 aus dem Drosselkanal 10 heraus und in die Ausgleichskammer 8. Der Druck der Flüssigkeit in der Ausgleichskammer 8 wird durch die einströmende Flüssigkeit erhöht. Dies beaufschlagt die Membran 84 wiederum mit einem Druck. Durch den Druck auf die Membran 84 dehnt sich die Membran 84 in den Bereich 88 aus. Die Ausdehnung bzw. Verformung der Membran 84 wandelt Bewegungsenergie der Flüssigkeit in Verformenergie um.

Der Drosselkanal 10 weist einen Strömungswiderstand auf. Der Strömungswiderstand führt zu einer Umwandlung der Bewegungsenergie der Flüssigkeit beim Strömen durch den Drosselkanal 10. Beispielsweise kann die Bewegungsenergie in Wärmeenergie, Vibrationsenergie oder eine andere Energieform oder eine Mischung verschiedener Energieformen umgewandelt werden. Durch die Verformung der Membran 84 und dem Strömungswiderstand des Drosselkanals 10 kann ein Teil des Drucks in der Arbeitskammer 6, insbesondere bei einer niederfrequenten Verformung der Tragfeder 4, umgeleitet und/oder gedämpft werden.

Die Flüssigkeit der Arbeitskammer 6 strömt auch durch den zugehörigen Umströmkanal 42 und beaufschlagt die erste Aktuatorseite 26, insbesondere die erste Ankerstirnseite 20 des Ankers 16, mit einem Druck. Durch den Druck auf die erste Ankerstirnseite 20 erfährt der Anker 16 eine Kraft. Zur aktiven Kompensation der Kraft bewegt sich der Anker 16 entlang der Auslenkachse 18. Insbesondere bewegt sich der Anker 16 in Richtung der Tragfeder 4. Die Bewegungsrichtung des Ankers 16 ist somit entgegen der Bewegungsrichtung der Tragfeder 4. Mit anderen Worten ist die Bewegungsrichtung des Ankers 16 invertiert und entgegen der Bewegungsrichtung 98 der Tragfeder 4 gerichtet. Dies reflektiert jedoch nur eine von vielen Möglichkeiten einer vorteilhaften Anordnung des Linearaktuators in Bezug auf das restliche Hydrolager 2. Beispielhaft soll jedoch im Weiteren die Erläuterung zur invertierten Ausgestaltung des Hydrolagers 2 fortgesetzt werden.

Durch die Bewegung des Ankers 16 beaufschlagt die zweite Ankerstirnseite 22 direkt die Flüssigkeit in dem Überstromkanal 30 mit einem Druck. Die Beaufschlagung mit Druck lässt die Flüssigkeit im Überstromkanal 30 in die Ausgleichskammer 8 strömen. Durch den Transport der Flüssigkeit aus dem Überstromkanal 30 wird auch in diesem Fall das Volumen der Ausgleichskammer vergrößert. Dadurch verformt sich die Membran 84. Die Ausdehnung bzw. Verformung der Membran 84 wandelt Bewegungsenergie der Flüssigkeit in Verformenergie um.

Die Bewegung des Ankers 16 des Linearaktuators 12 kann aktiv gesteuert werden. Dazu wird ein Strom durch die mindestens eine Spule 37 des Stators 14 entsprechend gesteuert. Auf die Tragfeder 4 wirkende Kräfte, insbesondere Stoßkräfte, können deshalb mit Hilfe des Linearaktuators 12 gedämpft werden. Dazu fließt in der mindestens einen Spule 37 des Linearaktuators 12 ein Strom derart, dass eine Auslenkung des Ankers 16 die Arbeitskammer 6 im Bereich der ersten Aktuatorseite 26 lokal vergrößert. Diese lokale Volumenvergrößerung gleicht wenigstens einen Teil der Volumenverkleinerung der Arbeitskammer 6 unterhalb der Tragfeder 4 bei einer elastischen Verformung der Tragfeder 4 aus. Dadurch wird die Volumenänderung der Arbeitskammer 6 aufgrund der Krafteinwirkung auf die Tragfeder 4 reduziert. Hieraus resultiert, dass die auf die Tragfeder 4 wirkende Kraft nur in einer gedämpften Größe übertragen wird, nämlich vorzugsweise an das seitliche Montageende 72.

Ist die Krafteinwirkung auf die Tragfeder 4 beendet, wird der Anker 16 des Linearaktuators 12 z.B. durch eine Umkehrung des Stromflusses in der Spule in die entgegengesetzte Richtung bewegt. Dadurch wird das Volumen im Bereich der ersten Aktuatorseite 26 lokal verkleinert. Die erste Ankerstirnseite 20 wirkt wie eine Kolbenfläche und beaufschlagt die Flüssigkeit in der Arbeitskammer 6 mit einem Druck. Diese lokale Verkleinerung des Volumens im Bereich der ersten Aktuatorseite 26 gleicht eine Volumenvergrößerung der Arbeitskammer, insbesondere durch die elastische Rückstellbewegung der verformbaren Tragfeder 4, aus. Somit wird die Volumenänderung der Arbeitskammer 6 aufgrund der Rückstellbewegung der Tragfeder 4 reduziert. Zudem strömt Flüssigkeit aufgrund der Zunahme des Volumens der Arbeitskammer 6 aus der Ausgleichskammer 8 durch den Drosselkanal 10 zurück die Arbeitskammer 6.

Die Flüssigkeitsschmierung der Gleitlagerung 24, insbesondere der Gleitflächen, ermöglicht eine reibungsreduzierte Bewegung des Ankers 16 relativ zum Stator 14. Hierzu reicht jedoch sehr wenig Flüssigkeit aus. Die Flüssigkeit aus der Arbeitskammer 6 oder dem Überstromkanal 30 kann dabei durch den Bypasskanal 38 in den Raum zwischen den Gleitflächen der Gleitlagerung 24 strömen. Der Strömungswiderstand des Bypasskanals 38 ist wesentlich höher, z.B. mindestens zehnfach so hoch, wie der Strömungs- oder Fluidwiderstand des Überstromkanals 30 und/oder des Drosselkanals 10. Durch die Flüssigkeitsschmierung der Gleitlagerung 24 kann im Wesentlichen die gesamte Nutzleistung des Linearaktuators 12 in eine Auslenkbewegung des Ankers 16 umgewandelt werden. Dadurch kann die Flüssigkeit in der Arbeitskammer 6 effizient und ohne Verluste über die erste Ankerstirnseite 20 mit einem Druck beaufschlagt werden.

Mit dem Hydrolager 2 können somit Kräfte, die auf die Tragfeder 4 einwirken, z.B. durch Vibrationen des Motors 46 oder des Getriebes 50, gedämpft werden.

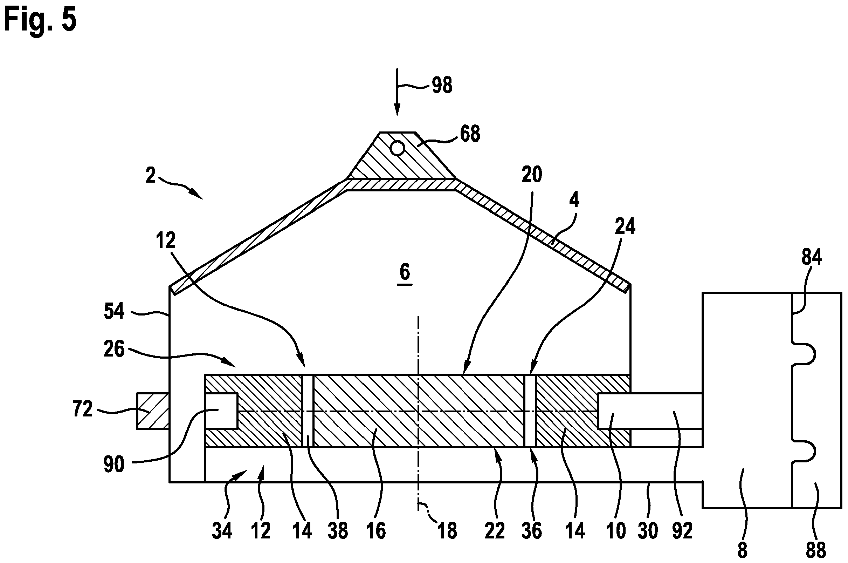

Das in Figur 5 gezeigte nicht-invertierte Hydrolager 2 ist in Teilen sehr ähnlich wie das invertierte Hydrolager in Fig. 4 aufgebaut. Jedoch ist bei dem nicht-invertierten Hydrolager 2 die erste Ankerstirnseite 20 der Tragfeder 4 zugewandt. Die zweite Ankerstirnseite 22 ist von der Tragfeder 4 abgewandt. Durch die Anordnung der ersten Ankerstirnseite 20 in Richtung der Tragfeder 4 kann die Flüssigkeit in der Arbeitskammer 6 die erste Ankerstirnseite 20 direkt und unmittelbar mit einem Druck beaufschlagen, und/oder umgekehrt. Mit anderen Worten unterscheidet sich das nicht-invertierte Hydrolager 2 von dem invertierten Hydrolager 2 durch die Ausrichtung der ersten Ankerstirnfläche 20 in Bezug zu der Tragfeder 4. Daher weist das nicht-invertierte Hydrolager 2 keinen von der Arbeitskammer 6 gebildeten Umströmkanal 42 auf.

Die Funktionsweise des nicht-invertierten Hydrolagers 2 ist jedoch sehr ähnlich zu der Funktionsweise des oben beschriebenen invertierten Hydrolagers 2. Auf die vorangegangenen Erläuterungen wird deshalb verwiesen und vorzugsweise in analoger Weise Bezug genommen.

Figur 6 zeigt ein Kraftfahrzeug 48. Das Kraftfahrzeug 48 weist einen Motor 46 und ein Getriebe 50 auf. Der Motor 46 und das Getriebe 50 sind mittels Hydrolager 2 mit der Karosserie 52 verbunden. Durch die Lagerung des Motors 46 an der Karosserie 52 durch die Hydrolager 2 werden Schwingungen des Motors 46 effektiv gedämpft. Durch die Lagerung des Getriebes 50 an der Karosserie 52 mittels des Hydrolagers 2 werden Schwingungen des Getriebes 50 effektiv gedämpft. An dieser Stelle wird darauf hingewiesen, dass die Darstellung des Kraftfahrzeugs 48 in Figur 6 rein schematisch zu verstehen ist. In der Praxis kann nämlich beispielsweise eine 3-Punktlagerung eingesetzt werden, bei der mindestens ein aktives Hydrolager 2 als Motorlager dient, mindestens ein aktives Hydrolager 2 als Getriebelager dient und beispielsweise ein weiteres Lager mit der Pendelstütze ausgebildet ist. Die in Figur 6 wiedergegebene Darstellung soll deshalb nicht einschränkend verstanden werden.

Bezüglich der weiteren vorteilhaften Ausgestaltung, Effekte und/oder Vorteile wird auf die vorangegangen Erläuterungen zumindest in analoger Weise Bezug genommen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Hydrolager (2), aufweisend:
eine verformbare Tragfeder (4),
eine von der Tragfeder (4) teilweise umschlossene Arbeitskammer (6), die mit einer Flüssigkeit gefüllt ist,
eine Ausgleichskammer (8),
einen Drosselkanal (10), der sich von der Arbeitskammer (6) zu der Ausgleichskammer (8) zum Austausch von Flüssigkeit erstreckt, und
einen elektromagnetisch wirkenden Linearaktuator (12) mit einem Stator (14) und einem Anker (16),
wobei sich der Anker (16) in einer Auslenkrichtung (18) von einer ersten Ankerstirnseite (20) zu einer gegenüberliegenden, zweiten Ankerstirnseite (22) erstreckt,
wobei der Anker (16) derart mittels einer Gleitlagerung (24) am Stator (14) gelagert ist, so dass der Anker (16) in elektromagnetischer Wechselwirkung mit dem Stator (14) in Auslenkrichtung auslenkbar ist,
wobei eine erste Aktuatorseite (26), die zumindest die erste Ankerstirnseite (20) umfasst,
einen Teil einer Kammerwandung (28) zur Begrenzung der Arbeitskammer (6) bildet, so dass die erste Ankerstirnseite (20) in unmittelbarem Kontakt mit der Flüssigkeit aus der Arbeitskammer (6) ist,
**dadurch gekennzeichnet, dass**
das Hydrolager (2) einen Überstromkanal (30) aufweist, der mit Flüssigkeit gefüllt ist,
ein Ende des Überstromkanals (30) von einer zweiten Aktuatorseite (34), die gegenüberliegend zu der ersten Aktuatorseite (26) angeordnet ist und zumindest die zweite Ankerstirnseite (22) umfasst, begrenzt ist, so dass die zweite Ankerstirnseite (22) in unmittelbarem Kontakt mit der Flüssigkeit des Überstromkanals (30) ist, und
sich der Überstromkanal (30) von dem zugehörigen Ende zu der Ausgleichskammer (8) zum Fluidaustausch erstreckt.

2. Hydrolager (1) nach dem vorhergehenden Anspruch, **dadurch gekennzeichnet, dass**
der Anker (16) im Querschnitt zumindest im Wesentlich zylindrisch, vorzugsweise kreiszylindrisch, ausgebildet ist.

3. Hydrolager (2) nach einem der vorhergehenden Ansprüche, **dadurch gekennzeichnet, dass**
die Gleitlagerung (24) von dem Linearaktuator (12) gebildet ist.

4. Hydrolager (2) nach einem der vorhergehenden Ansprüche, **dadurch gekennzeichnet, dass**
die Gleitlagerung (24) von der Flüssigkeit aus der Arbeitskammer (6) und/oder dem Überstromkanal (30) als Gleitflüssigkeit gespeist ist.

5. Hydrolager (2) nach dem vorhergehenden Anspruch, **dadurch gekennzeichnet, dass**
die Gleitlagerung (24) als ein durch die Flüssigkeit geschmiertes Festkörpergleitlager ausgebildet ist.

6. Hydrolager (2) nach einem der vorhergehenden Ansprüche, **dadurch gekennzeichnet, dass**
ein Spalt (36) der Gleitlagerung (24) einen Bypasskanal (38) zwischen der Arbeitskammer (6) und dem Überstromkanal (30) bildet.

7. Hydrolager (2) nach dem vorhergehenden Anspruch, **dadurch gekennzeichnet, dass**
der Fluidwiderstand des Bypasskanals (38) um mindestens das 10-fache größer ist als ein Fluidwiderstand des Drosselkanals (10) und/oder des Überstromkanals (30).

8. Hydrolager (2) nach einem der vorhergehenden Ansprüche, **dadurch gekennzeichnet, dass**
der Linearaktuator (12) teilweise in das Ende des Überstromkanals (30) derart eingefasst, dass der Stator (14) fluiddicht an einer Kanalwandung (40) des Überstromkanals (30) angeordnet ist.

9. Hydrolager (2) nach einem der vorhergehenden Ansprüche, **dadurch gekennzeichnet, dass**
zumindest ein Teil des Drosselkanals (10) integral mit dem Stator (14) ausgebildet ist.

10. Hydrolager (2) nach einem der vorhergehenden Ansprüche, **dadurch gekennzeichnet, dass**
die zweite Ankerstirnseite (22) der Tragfeder (4) zugewandt ist und die erste Ankerstirnseite (20) von der Tragfeder (4) abgewandt ist.

11. Hydrolager (2) nach dem vorhergehenden Anspruch, **dadurch gekennzeichnet, dass**
der Arbeitskammer (6) mindestens ein Umströmkanal (42) zugeordnet ist, der sich bis zu der ersten Ankerstirnseite (20) erstreckt.

12. Hydrolager (2) nach einem der vorhergehenden Ansprüche 1 bis 8, **dadurch gekennzeichnet, dass**
die erste Ankerstirnseite (20) der Tragfeder (4) zugewandt ist und die zweite Ankerstirnseite (22) von der Tragfeder (4) abgewandt ist.

13. Hydrolager (2) nach einem der vorhergehenden Ansprüche, **dadurch gekennzeichnet, dass**
der Anker (16) mittels Federn (44) in einer Ausgangslage vorgespannt ist.

14. Hydrolager (2) nach dem vorhergehenden Anspruch, **dadurch gekennzeichnet, dass**
die Federn (44) als Schraubenfedern, insbesondere Schraubendruckfedern, ausgebildet sind.

15. Motor (46) mit einem Hydrolager (2) nach einem der vorhergehenden Ansprüche, **dadurch gekennzeichnet, dass**
das Hydrolager (2) derart mit dem Motor (46) verbunden ist, so dass der Motor (46) mittels des Hydrolagers (2) an einem anderen Bauteil gelagert befestigbar ist.

16. Kraftfahrzeug (48), insbesondere Auto, aufweisend ein Hydrolager (2) nach einem der Ansprüche 1 bis 14,
wobei ein Motor (46), ein Getriebe (50) und/oder ein anderes Bauteil des Kraftfahrzeugs (48) mittels des Hydrolagers (2) an einem weiteren Bauteil des Kraftfahrzeugs (48), insbesondere der Karosserie (52) oder einem damit verbundenen Bauteil, gelagert befestigt ist.

## Claims

1. Hydraulic mount (2), having:
a deformable load-bearing spring (4),
a working chamber (6) which is partially surrounded by the load-bearing spring (4) and which is filled with a liquid,
an equalization chamber (8),
a throttle duct (10) which extends from the working chamber (6) to the equalization chamber (8) for the purpose of exchanging liquid, and
an electromagnetically acting linear actuator (12) having a stator (14) and an armature (16),
wherein the armature (16) extends in a deflection direction (18) from a first armature end side (20) to an opposite, second armature end side (22),
wherein the armature (16) is mounted on the stator (14) by means of a slide bearing arrangement (24) in such a way that the armature (16), in electromagnetic interaction with the stator (14), can be deflected in the deflection direction,
wherein
a first actuator side (26) which comprises at least the first armature end side (20) forms a part of a chamber wall (28) for delimiting the working chamber (6), so that the first armature end side (20) is in direct contact with the liquid from the working chamber (6),
**characterized in that**
the hydraulic mount (2) has a flow transfer duct (30) which is filled with liquid,
an end of the flow transfer duct (30) is delimited by a second actuator side (34) which is arranged oppositely to the first actuator side (26) and which comprises at least the second armature end side (22), so that the second armature end side (22) is in direct contact with the liquid of the flow transfer duct (30), and
the flow transfer duct (30) extends from the associated end to the equalization chamber (8) for the purpose of exchanging fluid.

2. Hydraulic mount (1) according to the preceding claim, **characterized in that**
the armature (16) is of at least substantially cylindrical, preferably circular cylindrical, form in cross section.

3. Hydraulic mount (2) according to either of the preceding claims, **characterized in that**
the slide bearing arrangement (24) is formed by the linear actuator (12).

4. Hydraulic mount (2) according to one of the preceding claims, **characterized in that**
the liquid from the working chamber (6) and/or the flow transfer duct (30) is fed as lubricant liquid to the slide bearing arrangement (24).

5. Hydraulic mount (2) according to the preceding claim, **characterized in that**
the slide bearing arrangement (24) is configured in the form of a solid slide bearing which is lubricated by the liquid.

6. Hydraulic mount (2) according to one of the preceding claims, **characterized in that**
a gap (36) of the slide bearing arrangement (24) forms a bypass duct (38) between the working chamber (6) and the flow transfer duct (30).

7. Hydraulic mount (2) according to the preceding claim, **characterized in that**
the fluid resistance of the bypass duct (38) is at least 10 times greater than a fluid resistance of the throttle duct (10) and/or of the flow transfer duct (30).

8. Hydraulic mount (2) according to one of the preceding claims, **characterized in that**
the linear actuator (12) is enclosed partially in the end of the flow transfer duct (30) in such a way that the stator (14) is arranged on a duct wall (40) of the flow transfer duct (30) in a fluid-tight manner.

9. Hydraulic mount (2) according to one of the preceding claims, **characterized in that**
at least a part of the throttle duct (10) is configured integrally with the stator (14).

10. Hydraulic mount (2) according to one of the preceding claims, **characterized in that**
the second armature end side (22) faces toward the load-bearing spring (4) and the first armature end side (20) faces away from the load-bearing spring (4) .

11. Hydraulic mount (2) according to the preceding claim, **characterized in that**
the working chamber (6) is assigned at least one flow-around duct (42) which extends as far as the first armature end side (20).

12. Hydraulic mount (2) according to one of the preceding Claims 1 to 8, **characterized in that**
the first armature end side (20) faces toward the load-bearing spring (4) and the second armature end side (22) faces away from the load-bearing spring (4) .

13. Hydraulic mount (2) according to one of the preceding claims, **characterized in that**
the armature (16) is preloaded in a starting position by means of springs (44).

14. Hydraulic mount (2) according to the preceding claim, **characterized in that**
the springs (44) are configured in the form of helical springs, in particular helical compression springs.

15. Engine (46) having a hydraulic mount (2) according to one of the preceding claims, **characterized in that**
the hydraulic mount (2) is connected to the engine (46) in such a way that the engine (46) can be fastened to another component in a mounted manner by means of the hydraulic mount (2).

16. Motor vehicle (48), in particular automobile, having a hydraulic mount (2) according to one of Claims 1 to 14,
wherein an engine (46), a transmission (50) and/or another component of the motor vehicle (48) are/is fastened to a further component of the motor vehicle (48), in particular the body (52) or a component connected thereto, in a mounted manner by means of the hydraulic mount (2).

## Revendications

1. Palier hydraulique (2), comprenant :
un ressort support déformable (4),
une chambre de travail (6) partiellement entourée par le ressort support (4), qui est remplie d'un liquide, une chambre de compensation (8),
un canal d'étranglement (10), qui s'étend de la chambre de travail (6) à la chambre de compensation (8) pour l'échange de liquide, et
un actionneur linéaire à effet électromagnétique (12) comportant un stator (14) et un induit (16),
l'induit (16) s'étendant dans une direction de déviation (18) d'un premier côté frontal d'induit (20) à un deuxième côté frontal d'induit opposé (22),
l'induit (16) étant monté sur le stator (14) au moyen d'un palier lisse (24) de telle sorte que l'induit (16) peut être dévié en interaction électromagnétique avec le stator (14) dans une direction de déviation,
un premier côté d'actionneur (26), qui comprend au moins le premier côté frontal d'induit (20), faisant partie d'une paroi de chambre (28) destinée à délimiter la chambre de travail (6) de telle sorte que le premier côté frontal d'induit (20) est en contact direct avec le liquide provenant de la chambre de travail (6),
**caractérisé en ce que**
le palier hydraulique (2) comporte un canal de trop-plein (30), qui est rempli de liquide,
une extrémité du canal de trop-plein (30) est délimitée par un deuxième côté d'actionneur (34), qui est agencé opposé au premier côté d'actionneur (26) et comporte au moins le deuxième côté frontal d'induit (22) de telle sorte que le deuxième côté frontal d'induit (22) est en contact direct avec le liquide du canal de trop-plein (30), et
le canal de trop-plein (30) s'étend de l'extrémité associée à la chambre de compensation (8) pour l'échange de fluide.

2. Palier hydraulique (1) selon la revendication précédente, **caractérisé en ce que**
l'induit (16) est configuré dans la coupe transversale au moins essentiellement sous forme cylindrique, de préférence sous forme cylindrique circulaire.

3. Palier hydraulique (2) selon l'une quelconque des revendications précédentes, **caractérisé en ce que**
le palier lisse (24) est formé par l'actionneur linéaire (12).

4. Palier hydraulique (2) selon l'une quelconque des revendications précédentes, **caractérisé en ce que**
le palier lisse (24) est alimenté par le liquide provenant de la chambre de travail (6) et/ou du canal de trop-plein (30) en tant que liquide lubrifiant.

5. Palier hydraulique (2) selon la revendication précédente, **caractérisé en ce que**
le palier lisse (24) est configuré sous la forme d'un palier lisse à corps solides lubrifié par le liquide.

6. Palier hydraulique (2) selon l'une quelconque des revendications précédentes, **caractérisé en ce que**
une fente (36) du palier lisse (24) forme un canal de dérivation (38) entre la chambre de travail (6) et le canal de trop-plein (30).

7. Palier hydraulique (2) selon la revendication précédente, **caractérisé en ce que**
la résistance aux fluides du canal de dérivation (38) est au moins 10 fois plus grande qu'une résistance aux fluides du canal d'étranglement (10) et/ou du canal de trop-plein (30).

8. Palier hydraulique (2) selon l'une quelconque des revendications précédentes, **caractérisé en ce que**
l'actionneur linéaire (12) est partiellement monté dans l'extrémité du canal de trop-plein (30) de telle sorte que le stator (14) est agencé de manière étanche aux fluides sur une paroi de canal (40) du canal de trop-plein (30).

9. Palier hydraulique (2) selon l'une quelconque des revendications précédentes, **caractérisé en ce que**
au moins une partie du canal d'étranglement (10) est configurée sous forme intégrée avec le stator (14).

10. Palier hydraulique (2) selon l'une quelconque des revendications précédentes, **caractérisé en ce que**
le deuxième côté frontal d'induit (22) est tourné vers le ressort support (4) et le premier côté frontal d'induit (20) est détourné du ressort support (4).

11. Palier hydraulique (2) selon la revendication précédente, **caractérisé en ce que**
au moins un canal de contournement (42), qui s'étend jusqu'au premier côté frontal d'induit (20), est associé à la chambre de travail (6).

12. Palier hydraulique (2) selon l'une quelconque des revendications 1 à 8 précédentes, **caractérisé en ce que** le premier côté frontal d'induit (20) est tourné vers le ressort support (4) et le deuxième côté frontal d'induit (22) est détourné du ressort support (4).

13. Palier hydraulique (2) selon l'une quelconque des revendications précédentes, **caractérisé en ce que**
l'induit (16) est prétendu dans une position initiale au moyen de ressorts (44).

14. Palier hydraulique (2) selon la revendication précédente, **caractérisé en ce que**
les ressorts (44) sont configurés sous la forme de ressorts hélicoïdaux, notamment de ressorts de pression hélicoïdaux.

15. Moteur (46) comprenant un palier hydraulique (2) selon l'une quelconque des revendications précédentes, **caractérisé en ce que**
le palier hydraulique (2) est relié au moteur (46) de telle sorte que le moteur (46) peut être fixé à un autre composant au moyen du palier hydraulique (2).

16. Véhicule automobile (48), notamment voiture, comprenant :
un palier hydraulique (2) selon l'une quelconque des revendications 1 à 14,
un moteur (46), une transmission (50) et/ou un autre composant du véhicule automobile (48) étant fixé au moyen du palier hydraulique (2) à un composant supplémentaire du véhicule automobile (48), notamment à la carrosserie (52) ou à un composant relié à celle-ci.
